# EUROPEAN PATENT SPECIFICATION

(11) **EP 0 412 619 B1**
(45) Date of publication and mention of the grant of the patent: **29.11.1995**
(21) Application number: 90202147.6
(22) Date of filing: 07.08.1990
(51) Int. Cl.: G05B 19/4061

(54) **Method and apparatus for determining potential collisions using a swept bubble data hierarchy**
Verfahren und Gerät zur Feststellung möglicher Kollisionen durch den Gebrauch von Angaben geometrischer Hubvolumenstrukturen
Méthode et appareil pour détermination d'éventuelles collisions utilisant des sphères amovibles comme structure de données

(30) Priority: 11.08.1989 US 392636
(43) Date of publication of application: 13.02.1991
(73) Proprietor: Philips Electronics N.V., 5621 BA Eindhoven (NL)
(72) Inventor: Featherstone, Roy, NL-5656 AA Eindhoven (NL)
(74) Representative: Strijland, Wilfred

(56) References cited:
- EP-A- 0 087 198
- EP-A- 0 268 317
- INTERNATIONAL JOURNAL OF ROBOTICS RESEARCH vol. 8, no. 1, February 1989,CAMBRIDGE MA US pages 3 - 25; Stephan Cameron: "Efficient intersection tests for objects defined constructively"
- INTERNATIONAL JOURNAL OF ROBOTICS RESEARCH vol. 7, no. 1, February 1988,CAMBRIDGE MA US pages 42 - 70; E. Freund: "Real-Time pathfinding in multirobot systems including obstacle avoidance"
- COMPUTER IN MECHANICAL ENGINEERING(CIME) vol. 7, no. 2, September 1988, NEW YORK US pages 58-64; Ching Shiow Tseng et al.: "Generating collision-free paths for robot manipulators"

## Description

The invention relates to methods and apparatus for determining and avoiding a potential collision of an automated machine or robot with fixed or moving objects in its environment.

### BACKGROUND OF THE INVENTION

A problem is the determination whether or not a collision will occur when the paths and positions of objects are predetermined. Prior art teaches that the size and shape of objects may be modeled as a series of overlapping circles (in two dimensions) or spheres (in three dimensions). Prior art, in particular GB 2,196,763, (EP 0,268,317) also teaches that a hierarchy of such circles or spheres may be effectively used to represent the shape of an object in a data structure at varying levels of detail.

In the description and claims which follow, spheres and circles of the above-mentioned types are referred to as bubbles and the above-mentioned data structure is referred to as a bubble hierarchy.

In a typical bubble hierarchy, the top of the hierarchy is a single spherical bubble, the enclosing bubble, which encloses an entire object. This is the most coarse level of detail in the data structure. Within the top bubble, there are a plurality of bubbles, each of which encloses a portion of the object and which, between them, enclose the entire object. Within each of the bubbles at this second level there may be another plurality of bubbles, each of which encloses a smaller portion of the object and which, between them, enclose the entire portion of the object which is in the second level bubble. The expansion of bubbles to enclose finer levels of detail continues until the bottom of the bubble hierarchy is reached. The bubbles at the bottom of the hierarchy each describe a small fragment of the object. In the simplest case (and in the discussion which follows) these bubbles are assumed to be solid; i.e. every point in the interior of such a bubble is assumed to be in the interior of the object. In alternate representations, each of the ,lowest level bubbles is associated with the description of the geometry of the enclosed fragment.

A bubble hierarchy is useful for determining whether a point is inside or outside of an object and whether two objects (each represented by separate bubble hierarchies) intersect. The general technique for answering these questions is called bubble bursting.

For determining whether a point is inside an object, a point-in-bubble test is first applied to the enclosing bubble. If this succeeds, (i.e., the point is found to be inside the enclosing bubble) then the bubble is burst, revealing the group of bubbles immediately below it in the hierarchy. The test is repeated with each of the these bubbles, and whereever the test succeeds the test bubble is burst revealing the bubbles immediately below it and those bubbles are tested. The procedure terminates if the point is found to be inside a bubble at the bottom of the hierarchy (in which case the point is inside the object) or if the point is found to be outside all of the remaining bubbles after a certain number have been burst.

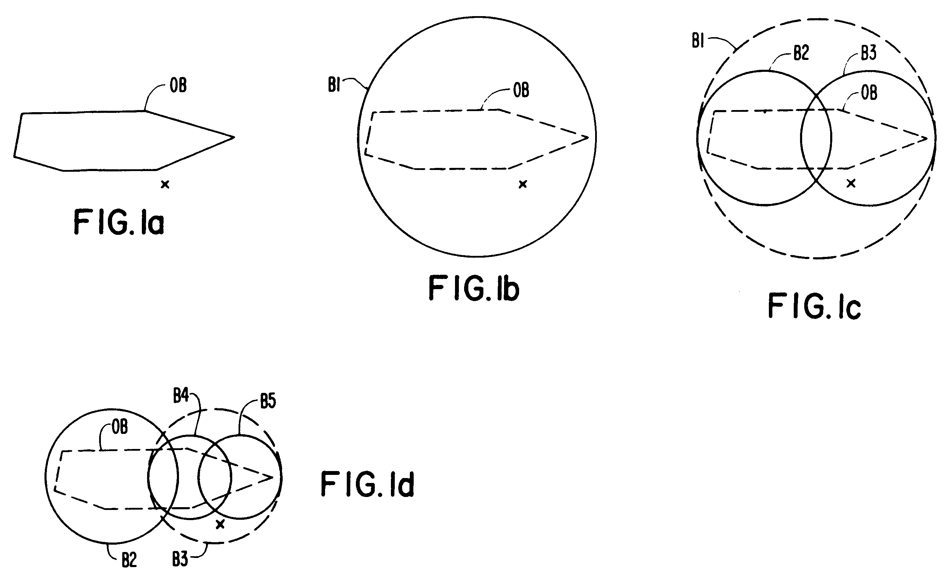

Figures 1a through 1d illustrate a prior art bubble bursting algorithm which tests whether a point X (Figure 1a) is inside a stationary object OB. Figure 1b illustrates testing at the enclosing bubble B1. The point X is inside the enclosing bubble so the bubble is burst to reveal bubbles B2 and B3 (Figure 1c) each of which is tested. The point X is inside bubble B3 so it is burst (Figure 1d) to reveal bubbles B4 and B5 each of which is again tested. The point X is not inside either bubble B4 or bubble B5 so the test terminates and concludes that the point is not inside the object OB. The point X may be situated within two bubbles of the same hierarchical level. Then both would be burst.

In an alternate embodiment of a bubble hierarchy, an additional bubble is associated with each member of the hierarchy so that it is now a hierarchy of bubble pairs. A single bubble pair consists of an outer bubble (the original bubble) and an inner bubble (the additional one) which lies entirely in the interior of the original object, and is preferably concentric with its associated outer bubble. A bubble pair is burst only if the point of interest lies between the inner and outer bubbles, since if the point lies inside the inner bubble it is known, without further testing, that the point is inside the object. This feature shortens the calculations.

### SUMMARY OF THE INVENTION

In accordance with the invention, which is defined by claim 1, space which is potentially occupied by a moving object is represented as a data structure which includes a hierarchy of swept bubbles. A swept bubble is a tool for representing, approximately, the volume which results from sweeping a given shape through every possible position along a given curve. When organized into a swept bubble hierarchy it is a tool for describing, at various levels of detail, the total volume which may potentially be occupied by a movable device with many degrees of freedom (for example, a robot) which is positioned anywhere within a given range of positions.

The position and orientation of a moveable device (or parts thereof) can be described by a set of generalized coordinates herein termed position variables. The position variables form the coordinates of a space called the configuration space of the device. The dimension of the configuration space is given by the number of variables. Each point in the configuration space corresponds to a unique position and orientation of the device.

A swept bubble hierarchy is a bubble hierarchy which comprises one or more swept bubbles. Whereas an ordinary bubble hierarchy represents the shape of a single object, a swept bubble hierarchy can represent the space occupied by a collection of bodies which can move relative to each other and relative to their environment. The swept bubbles represent the movements of the bodies while ordinary bubbles in the hierarchy represent the shapes of the individual bodies.

A swept bubble hierarchy can be used to represent the potential space occupancy of any moveable device which can be modeled as a collection of rigid bodies if the position of each body can be expressed as the product of the sequence of displacements, where each displacement is a function of only one position variable and no position variable occurs more than once in the product. The conditions on positions restrict the kind of mechanism which can be represented to those which do not contain kinematic loops with more than one intrinsic degree of freedom. This is a broad class of mechanisms including most robot mechanisms and any vehicle where the position and orientation of the vehicle as a whole are variables of interest.

A swept bubble hierarchy is used for the same purpose as an ordinay bubble hierarchy; that is to detect possible interferences between objects. However, while an ordinary bubble hierarchy represents an object in a particular position, the swept bubble hierarchy represents objects which may be anywhere within a given range of positions, and the objective is to determine whether interference is possible in any one of those positions. Such questions can be answered using bubble bursting techniques in much the same way as with prior art ordinary bubble hierarchies except that there are special rules for bursting a swept bubble.

A swept bubble hierarchy can be used for calculating answers to questions such as:
* It is possible for a given object to interfere with (i.e. physically obstruct) the device in any of the given range of positions?;
* In which positions might the device interfere with a given object?;
* Which positions of the device are free from any possibility of interference with a given set of objects?

The last question, in particular, is crucial in the context of planning collision-free paths for the device. By itself, various measures can be taken if such collisions were deemed to occur. In a physical environment, the path can be changed, the interfering object can be moved, or taken away, or a "help" signalization to a higher authority layer can be generated.

The volume represented by a swept bubble hierarchy is an over-estimate of the true swept volume of the device, but converges to an accurate representation as the level of detail in the hierarchy is increased. At the most coarse level of detail, the volume is represented as a single bubble enclosing the whole swept volume. At the finest level of detail, the volume is represented as the union of all bubbles at the lowest level of the hierarchy. The degree of accuracy with which this shape models the true swept volume of the object is determined when the swept bubble hierarchy for a particular device is being designed. Intermediate levels of detail are expressed by bubbles at intermediate levels of the hierarchy.

There is a trade-off between computation time and accuracy: the greater the required accuracy, the longer the calculation of answers takes. Utilization of data structures incorporating swept bubble hierarchies allow unimportant details to be suppressed from the calculation and thus permits a trade-off between computational time and level of detail. As an example, in the context of path planning, questions concerning distant objects can usually be answered quickly at a low level of detail, while finer levels of detail can be used for objects which are close to the device. The overall effect of using swept bubble hierarchies is to reduce the amount of computation needed (relative to using a fixed level of detail) in planning a collision-free path.

Another advantage of the swept bubble concept is that it allows a direct mapping to be made between regions in configuration space and the volume in real space which is occupied by the device when it is swept through every configuration in the region. Swept bubbles can also be used to map obstacles into forbidden regions in the configuration space of the device. These are important capabilities in the context of automatic path planning. The level of detail of the mapping can be adjusted to trade-off computation time against dimensional accuracy.

A machine in accordance with the invention contains a memory wherein space is potentially occupied by a moving object is represented as a data structure which includes swept bubbles. A preferred embodiment of the machine also includes analysis means which can determine the need to selectively expand a swept bubble and expanding means which burst a swept bubble in accordance with swept bubble bursting rules.

### BRIEF DESCRIPTION OF THE DRAWING

The invention can be understood with reference to the attached drawings in which:
Figures 1a through 1d illustrate ordinary bubble hierarchies of the prior art;
Figure 2a illustrates a swept bubble;
Figure 2b illustrates a swept bubble pair;
Figure 3 is a swept bubble data structure;
Figure 4 schematically illustrates a two-link mechanism of a robot arm;
Figures 5a and 5b are a swept bubble hierarchy for the two-link mechanism of Figure 4, and
Figure 6 is an illustration of a mapping into a configuration space using a swept bubble hierarchy.

The Appendix lists various program descriptions for implementing the swept bubble algorithms.

### DESCRIPTION OF THE PREFERRED EMBODIMENT

A swept bubble is a data structure specifying an approximate representation of the volume occupied by an ordinary bubble which has been swept through a curve in space.

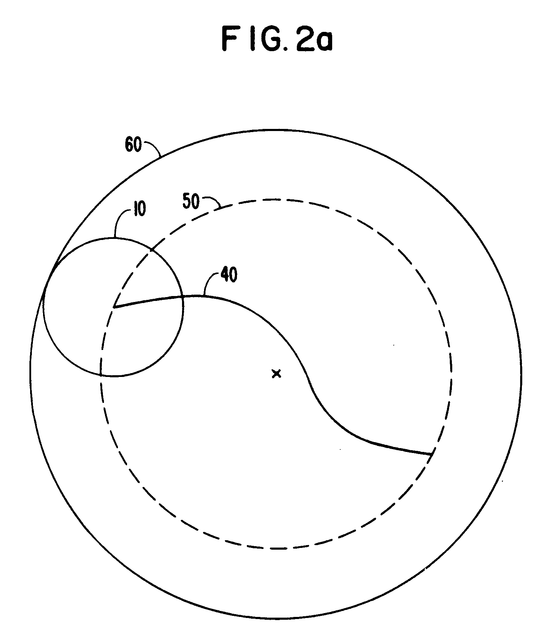

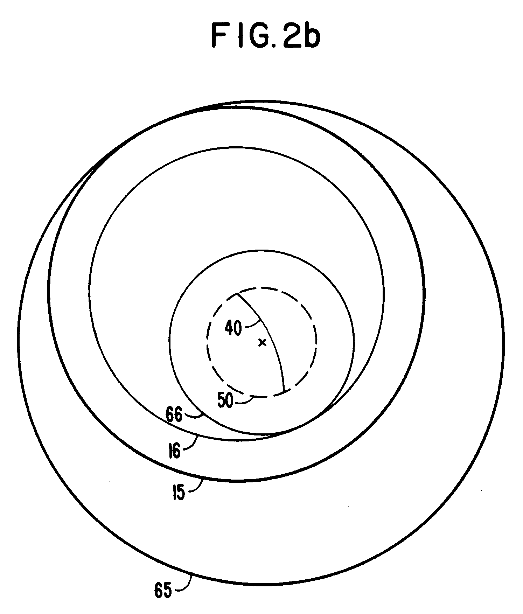

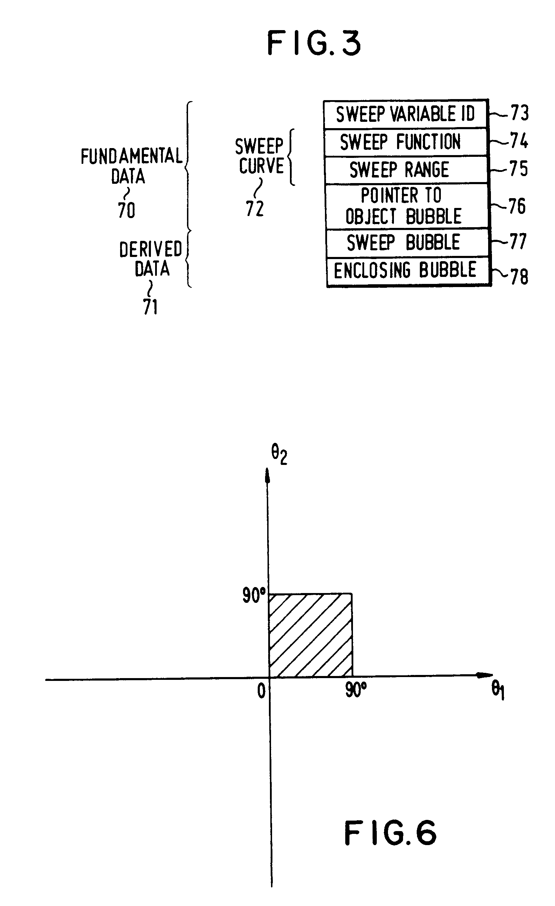

Figures 2a, 2b, and 3 illustrate the terminology and data structure members associated with a swept bubble. In Figure 2a, the object bubble 10 is an ordinary bubble which instantenously completely encloses a moving object. The sweep curve 40 is the curve along which the object bubble is swept. It may, for example, be a curve expressed in the six-dimensional space of positions and orientations of a rigid body. For simplicity, only a two-dimensional sweep curve has been shown. The sweep bubble 50 is an ordinary bubble which encloses the path which is followed by the center point of the object bubble when it is swept along the sweep curve. The enclosing bubble 60 is a bubble which enclosed the total swept volume, that is it encloses the object bubble at all points as it is swept over the length of the sweep curve.

Figure 2b shows an alternate type swept bubble where the object bubble and enclosing bubbles are concentric bubble pairs. The outer object bubble 15 of the object bubble pair corresponds to the object bubble 10 of Figure 2a. Similarly, the outer enclosing bubble 65 of the enclosing bubble pair corresponds to the enclosing bubble 60 of Figure 2a. The inner object bubble 16 lies concentrically inside outer object bubble 15, and furthermore, it lies entirely inside the object, so any point inside this bubble is also inside the object. The inner enclosing bubble 66 is a bubble which is always inside the inner object bubble, no matter where the object is along the sweep curve. Any point inside this bubble will be inside the object regardless of where the object is along the sweep curve. If the sweep bubble is larger than the inner object bubble or if the inner object bubble does not exist, then the inner enclosing bubble will not exist. This can be indicated by a zero or negative radius, or by a flag in the data structure. In practice, this case occurs when the inner object bubble is relatively small and the sweep curve is relatively large.

Object bubble 10 may be an enclosing bubble of a bubble hierarchy which represents the shape and/or swept volume of some part or parts of a device, but the contents of the object bubble are not necessary for the purposes of describing the swept bubble. The only relevant properties of the object bubble are its radius and the location of its center point. The latter is specified with respect to a moving coordinate frame.

The sweep curve is described by a sweep function which gives the position and orientation of the moving coordinate frame relative to a reference coordinate frame as a function of a single variable. This variable is called the sweep variable and is identified with a particular position variable of the moving device. It is limited to a finite range of values called the sweep range which is not necessarily the same as the total motion range of the position variable. The position of the object is fixed relative to the moving coordinate frame so that its position with respect to the reference frame varies with the sweep variable.

The reference frame itself may be a moving frame, controlled by a swept bubble higher up in the hierarchy, thus allowing the object bubble to have more than one degree of freedom in the overall hierarchy. The sweep curve is described completely by the sweep function and the sweep range.

Figure 3 shows a data structure to describe a swept bubble. Herein, legends are as follows: 70 fundamental data, 71 derived data, 72 sweep curve, 73 sweep variable ID, 74 sweep function, 75 sweep range, 76 pointer to object bubble, 77 sweep bubble, 78 enclosing bubble.

The descriptions of the sweep bubble and the enclosing bubble are derived from the data describing the object bubble and the sweep curve. The size and location (in reference coordinates) of the sweep bubble is calculated from the path followed by the center of the object bubble as the sweep variable is varied from one end of the sweep range to the other. The complexity of the calculation relates to the complexity of the sweep curve.

The enclosing bubble has the same center as the sweep bubble and its radius is the sum of the radii of the sweep and object bubbles.

There are two distinct ways to burst a swept bubble. The object bubble can be burst or the sweep range can be cut in half. The choice is made by a swept bubble bursting heuristic.

In a preferred embodiment, the swept bubble bursting heuristic compares the relative contributions of the object bubble and the sweep range to the total amount of approximation involved in representing the swept volume of the object with the enclosing bubble. The bigger contributor is chosen to be burst/cut. A suitable measure of the contribution of the sweep range to the total amount of approximation is the diameter of the sweep bubble, and a suitable measure of the contribution of the object bubble is either its radius (the difference between inner and outer radii for a concentric bubble pair) or a precomputed value based on the shape of the enclosed object which can be computed when the bubble hierarchy is being designed.

If the object bubble, is burst, a number of new swept bubbles are created, one for each bubble exposed as a result of bursting the object bubble. Each new swept bubble takes one of the newly exposed bubbles as its object bubble and inherits the sweep curve from the swept bubble being burst. New sweep and enclosing bubbles are then calculated for each of the new swept object bubbles. The sweep curve is the same for all of the new swept bubbles, but the sweep bubbles depend on the position of the center points of the new object bubbles which will, in general be different for each of the new swept bubbles. The new swept bubbles become the set of bubbles exposed as the result of bursting the original swept bubble.

If the sweep range, is cut, two new swept bubbles are created. In this case, each new swept bubble inherits the original object bubble, sweep function, and sweep variable from the bubble being burst, but gets only a part of the original sweep range (where the sum of the sweep ranges of the new bubbles equals the sweep range of the burst bubble). In a preferred embodiment, the original sweep range is cut into two equal halves and each new bubble inherits one of the halves. New sweep and enclsoing bubbles are then calculated. The two new sweep curves are different, even though they share the same sweep function, because the sweep variable varies over different ranges.

A practical movable device has limited motion accuracy and resolution. Uncertainly about the position of the device can be accounted for by using a slightly extended sweep range when calculating the parameters of the sweep bubble and limited resolution can be accounted for by modifying the swept bubble bursting heuristic so that sit refuses to cut a sweep range if it is less than a preset minimum value. The parameters describing motion resolution and accuracy may be specified individually for each position variable.

The process of bursting a swept bubble creates new swept bubbles. Since the bubble bursting procedure is likely to be applied many times to a swept bubble hierarchy, it is useful to retain some of the bubble parameters in memory in order to avoid repeating the calculations involve in creating them. This can be done by assoicating a flag with each swept bubble which indicates whether or not a precomputed expansion exists together with a pointer to the relevant data.

The Appendix describes an algorithm for expanding a swept bubble. Symbolic constants (e.g. true, false) appear in italics, functions and variables in roman, a left-arrow indicates the assignment operation, and a period indicates selecting an element of a data structure.

The main procedure, expand_swept_bubble, is given a swept bubble, sb, which is to be expanded. This swept bubble may be a component in a swept bubble hierarchy. The purpose of the procedure is to create a number of new bubbles (child[i]) which can be regarded as the children of the swept bubble's enclosing bubble; i.e., if the enclosing bubble is burst then these new bubbles are exposed.

There are two ways in which a swept bubble is expanded: cut the sweep range, or burst the swept bubble's object bubble. expand_swept_bubble calls a function decide_expansion to choose one of these, and then executes the appropriate actions.

If sb is to be expanded by cutting the sweep range, then two new swept bubbles are created, each identical to the original swept bubble except for the sweep range: if the original sweep range was low...high, where low and high are two numbers giving the end points of the range, then the sweep ranges of the two children are low...middle and middle...high, where middle is the midpoint of the original range.

The procedure reevaluate calculates new values for the sweep and enclosing bubbles of the children. These will, in general, be different from the sweep and enclosing bubbles of sb, since the children have different sweep ranges from sb.

If sb is to be expanded by bursting the object bubble then the first step is to check whether the object bubble itself is a swept bubble. If so, then it needs to be expanded first, so that its children are available to become the object bubbles of the children of sb. expand_swept_bubble achieves this by calling itself recursively to expand the object bubble. The next step is to create a number of new swept bubbbles, one for each child of the object bubble. Each new bubble is identical to sb, except that it has as its object bubble one of the children of sb's object bubble. New swept and enclosing bubbles are then calculated for each new swept bubble.

The purpose of the function decide_expansion is to decide which expansion method to use on the swept bubble given to it as an argument. The first step is to check whether both options are available. This is done by calling the functions can_expand (with the object bubble as argument) and can_cut_sweep. The function can_expand determines whether the given bubble can be expanded. An ordinary bubble may be expanded if it has at least one child and its precision value is greater than a user-supplied value stored in ordinary bubble resolution limit. This test is performed by the function can_burst_bubble. A swept bubble can be expanded if either its sweep range can be cut or its object bubble can be expanded. The former is tested by the function can_cut_sweep and the latter by a recursive call to can_expand. A sweep range can be cut if it is larger than the user-supplied resolution limit for the corresponding sweep variables. These values are accessed by the function resolution_limit.

In case that both expansion methods are availabe for expanding the swept bubble, decide_expansion chooses on the basis of precision values of the object bubble and sweep bubble. A precision value is a measure of the amount of approximation (or uncertainty) in the shape or location of an object, associated with a given bubble in the hierarchy. The precision value for an ordinary bubble is the maximum error incurred by representing the shape of the enclosed object fragment as a bubble. These values can be calculated at the time the bubble hierarchy is made. If the ordinary bubble is a concentric bubble pair then a suitable value for the precision is the difference of the inner and outer radii. The precision value for a sweep bubble is a measure of the maximum uncertainty in position induced by the sweep curve. A suitable value is the diameter of the sweep bubble. The precision of a swept bubble is calculated from the precisions of its sweep and object bubbles. A suitable method is to let the swept bubble precision be the larger of the sweep and object bubble precisions. The required calculations are performed by the function precisions.

If it has a choice, decide_expansion chooses to burst the object bubble if it has a higher precision value than the sweep bubble, otherwise it cuts the sweep range. The overall effect of this strategy is to expand the apparent single largest contributor to the level of uncertainty in the original swept bubble.

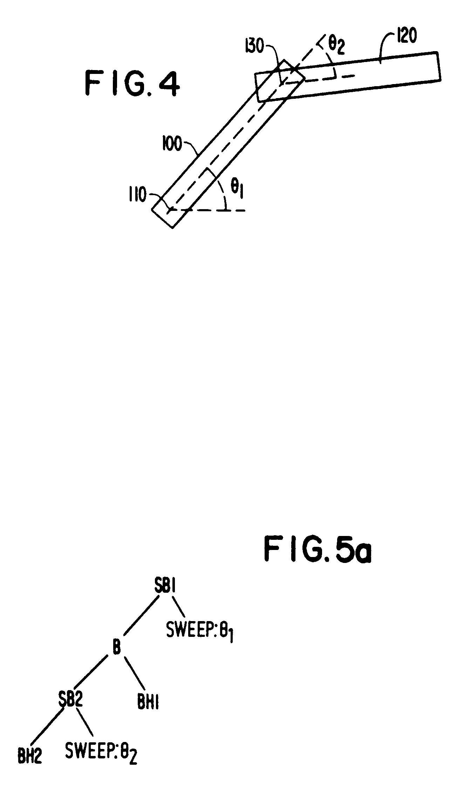

Figure 4 schematically illustrates a two-link mechanism (which may for example be a robot arm) which is useful for illustrating the use of swept bubble hierarchies. A first link at 100 is pivotable about a fixed axis 110 through an angle described by a first variable ϑ₁. A second link 120 is pivotable about a second axis 130 which is supported at an end of the link 100 remote from the axis 110. Rotation of link 120 relative to link 100 about axis 130 is measured by a second position variable ϑ₂.

Figure 5a illustrates a swept bubble hierarchy which can be used to describe the positions in space occupied by the mechanism of Figure 4. Bubble hierarchy BH2 is an ordinary bubble hierarchy which represents the shape of link 120. Swept bubble SB2 sweeps bubble hierarchy BH2 through a sweep range associated with position variable ϑ₂. Ordinary bubble 8 contains swept bubble SB2, which describes the range of positions occupied by link 120 with respect to link 100 and ordinary bubble hierarchy BH1 which represents the shape of link 100. Swept bubble SB1 then sweeps bubble 8 through a sweep range associated with position variable ϑ₁.

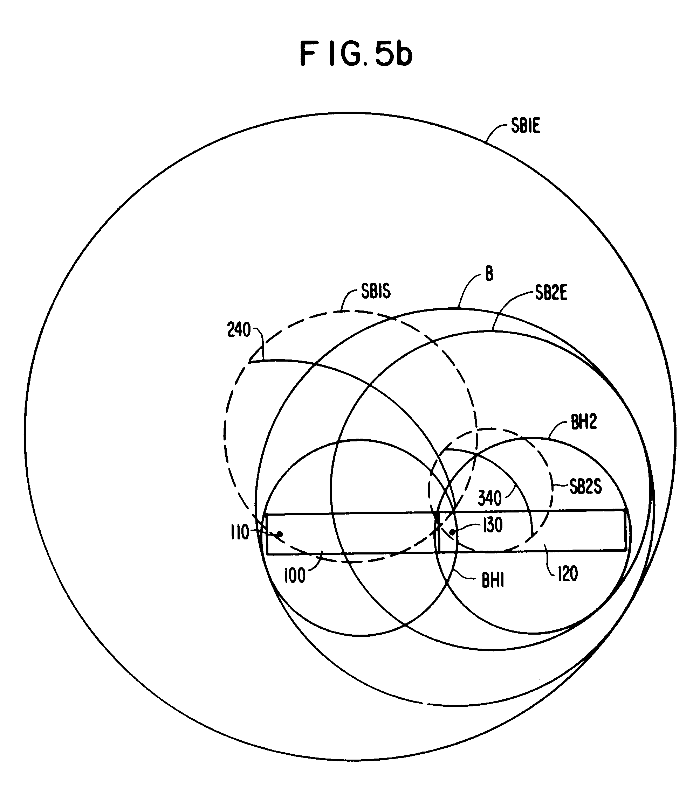

Figure 5b illustrates the geometry of the bubble hierarchy of Figure 5a where the sweep ranges of ϑ₁ and ϑ₂ are each 90°. The enclosing bubbles of SB1 and SB2 are respectively designated SB1E and SB2E. The sweep bubbles of SB1 and SB2 are designated SB1S and SB2S and the paths of the centers of B and BH2 are respectively 240 and 340.

The appendix also contains a listing of computer routines for determining collisions (interferences) between swept bubble hierarchies and for classifying them as intersecting or non-intersecting. The programs, written in the C language, accept ordinary bubble hierarchies as special cases of swept bubble hierarchies. Program "bubbles.h" define the bubble's data structure. Program "bubbles.c" contains basic functions for creating, manipulating and deleting bubbles and bubble hierarchies. Collision detection between bubble hierarchies is performed by the routing SBHTEST on page 3 of program BURST.C.

The test uses a depth-first search strategy to look for collisions.

If swept bubbles in data structures are represented as concentric bubble pairs (e.g. of the type depicted in Figure 2b) then the analysis algorithm only needs to expand intersection bubbles if the outer enclosing bubbles intersect and the corresponding inner bubbles do not intersect.

An important feature of swept bubbles is that they allow direct mapping between regions in the device's configuration space and the volume within which the device is contained if positioned anywhere within that region. The sweep variable of each swept bubble is identified with one of the position variables of the device, so each sweep range maps directly onto an interval along one of the coordinates of configuration space. Different parts of the swept bubble hierarchy correspond to different regions in configuration space. The region corresponding to any given bubble is the intersection of all intervals corresponding to the sweep ranges of all the sweep bubbles lying on the path from the top of the hierarchy to the bubble in question. If any variable does not occur in this path then the region extends along the full range of that variable in configuration space. When a swept bubble hierarchy is first constructed for a particular movable device it must contain at least one swept bubble for each position variable of the device.

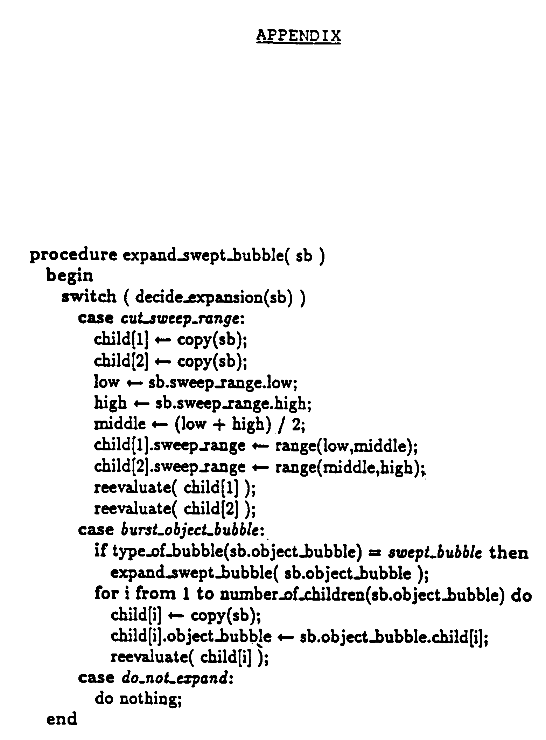

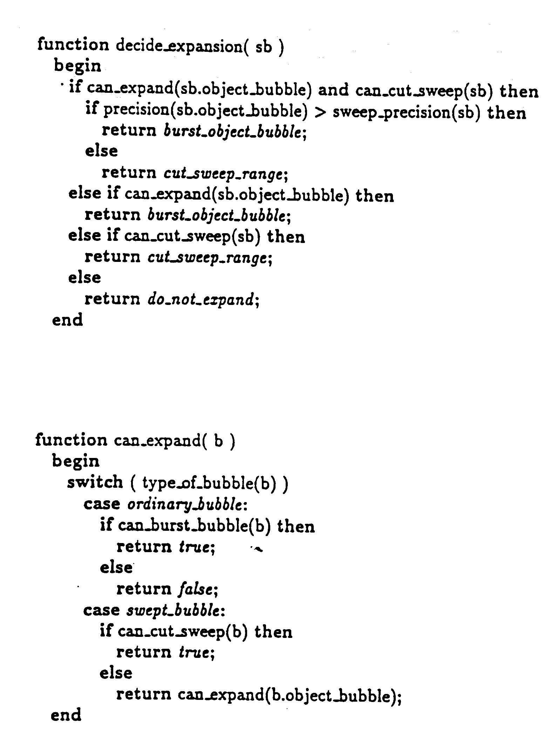

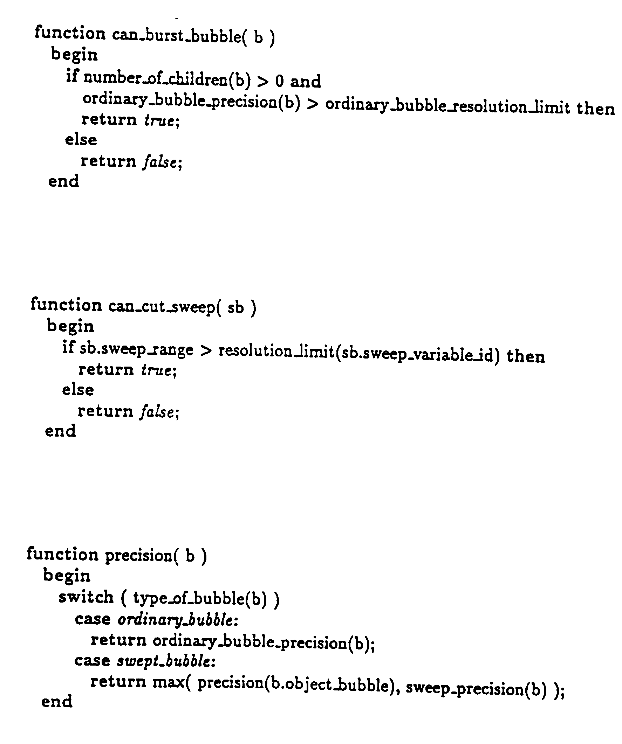

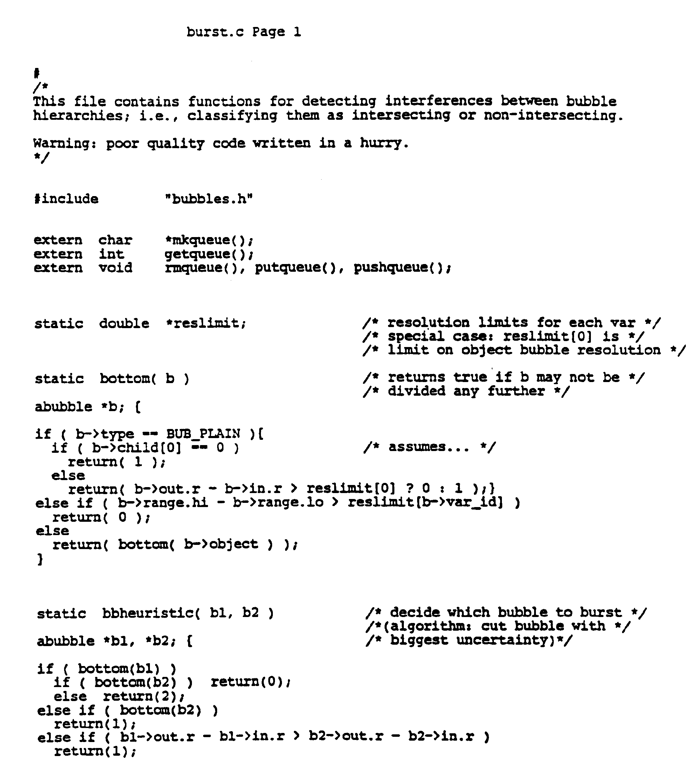

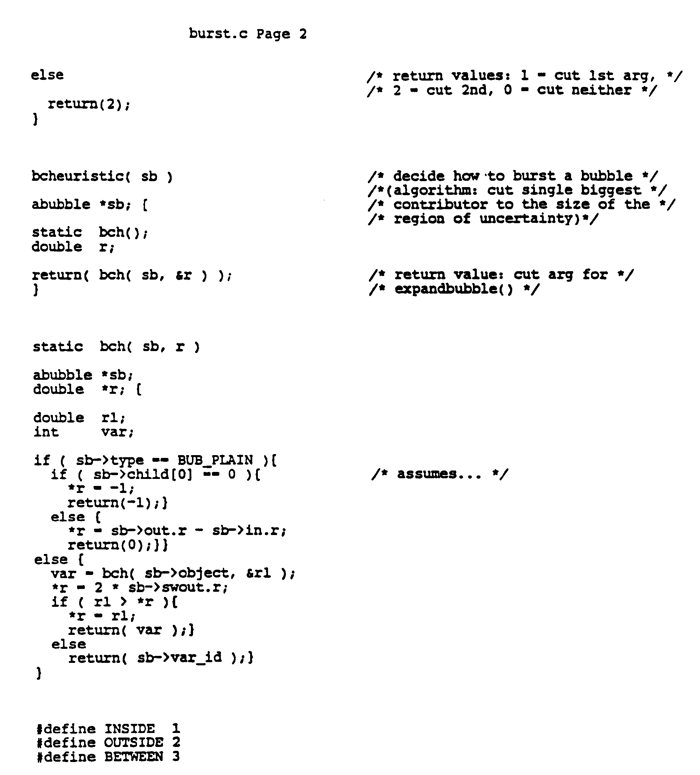

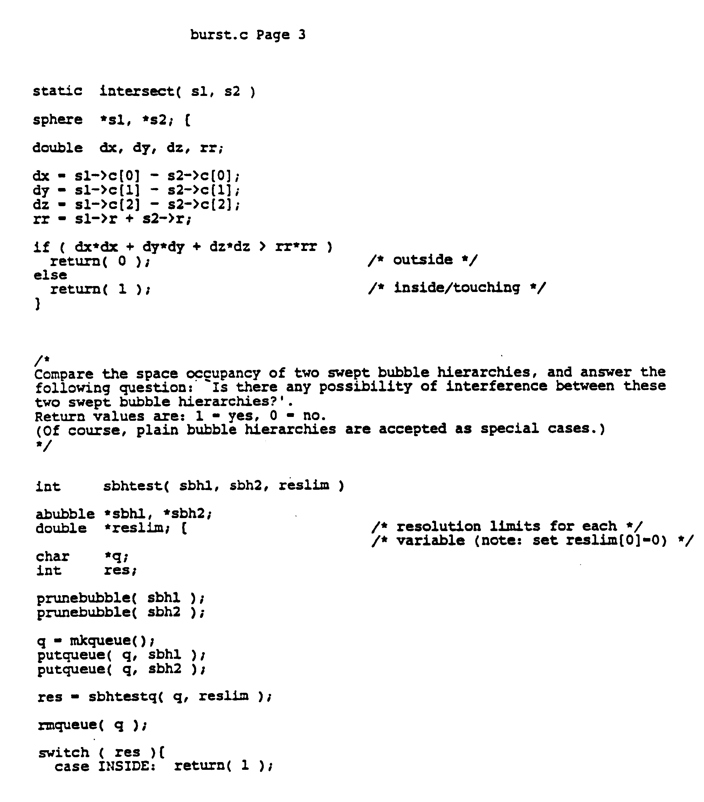

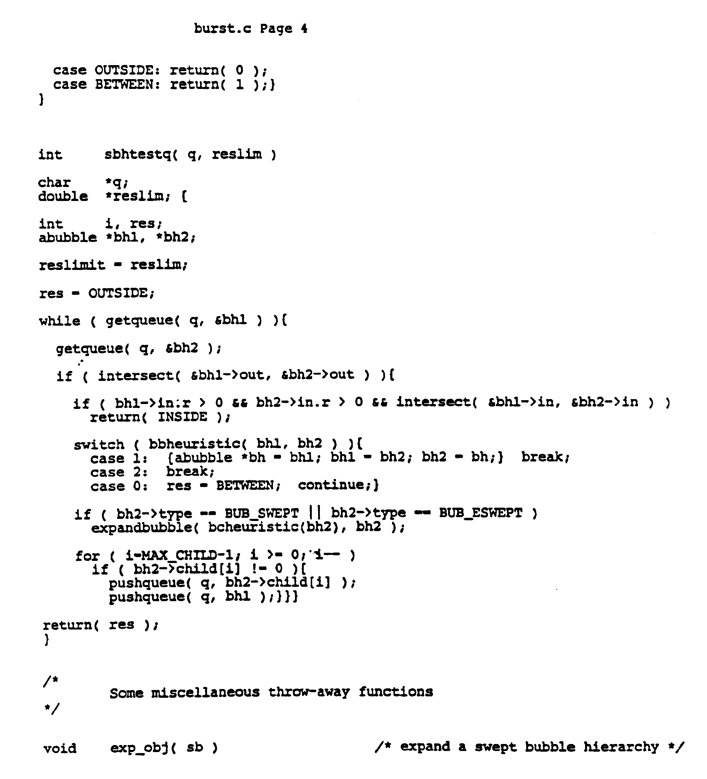

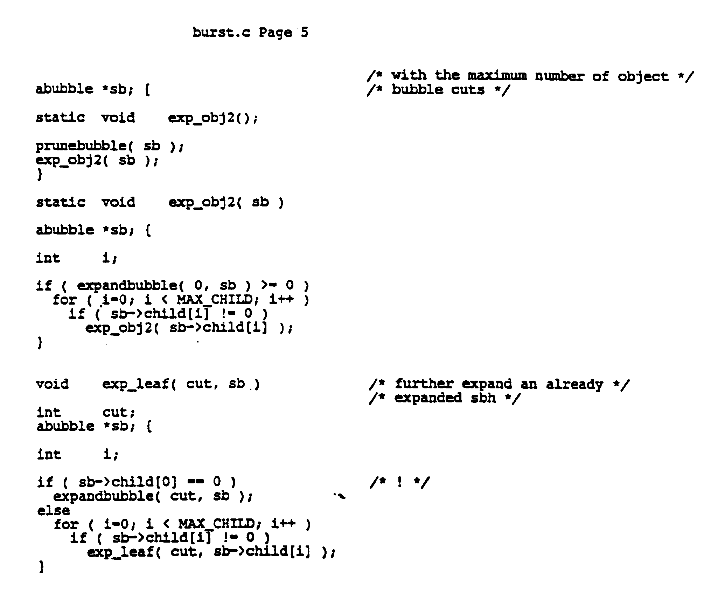

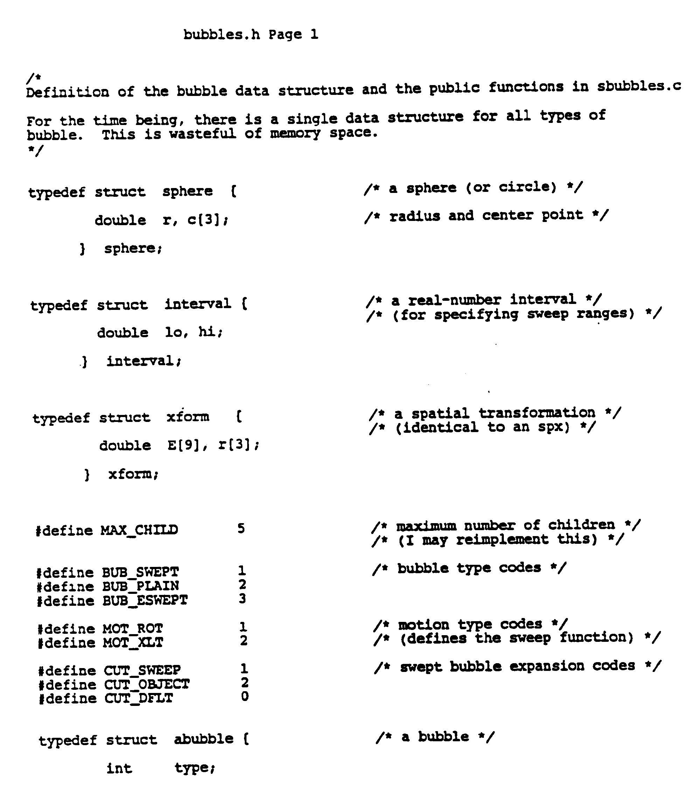

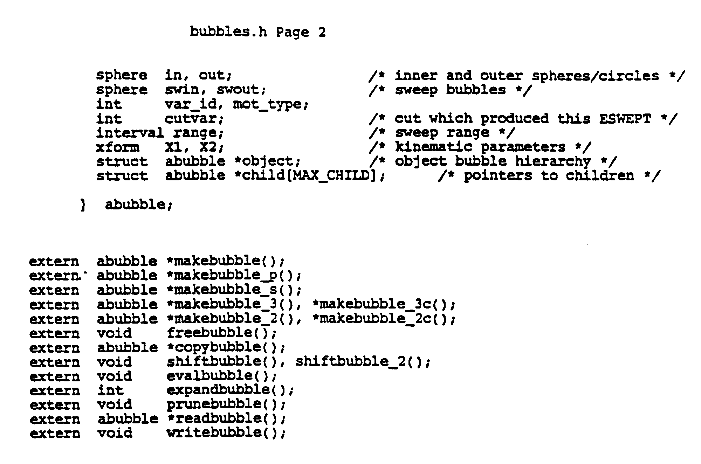

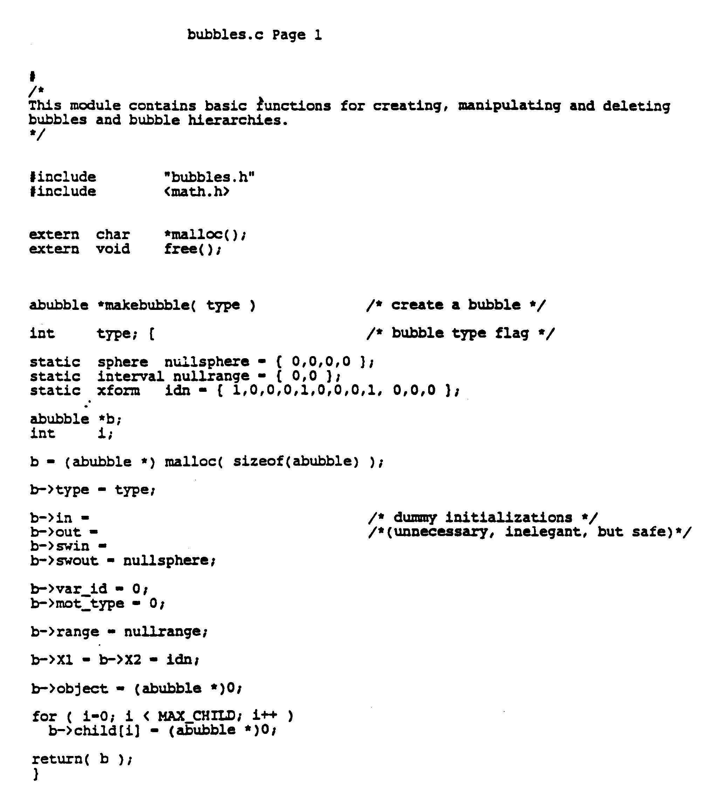

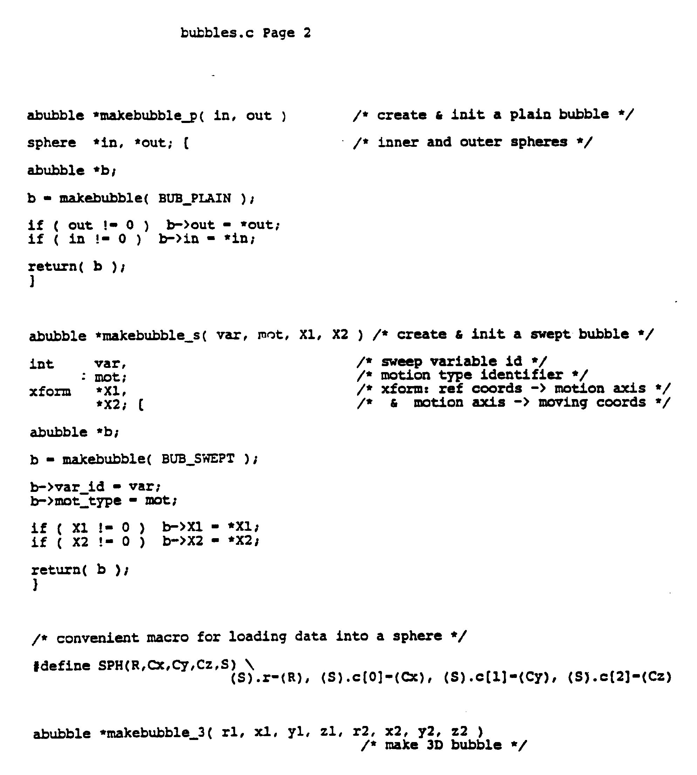

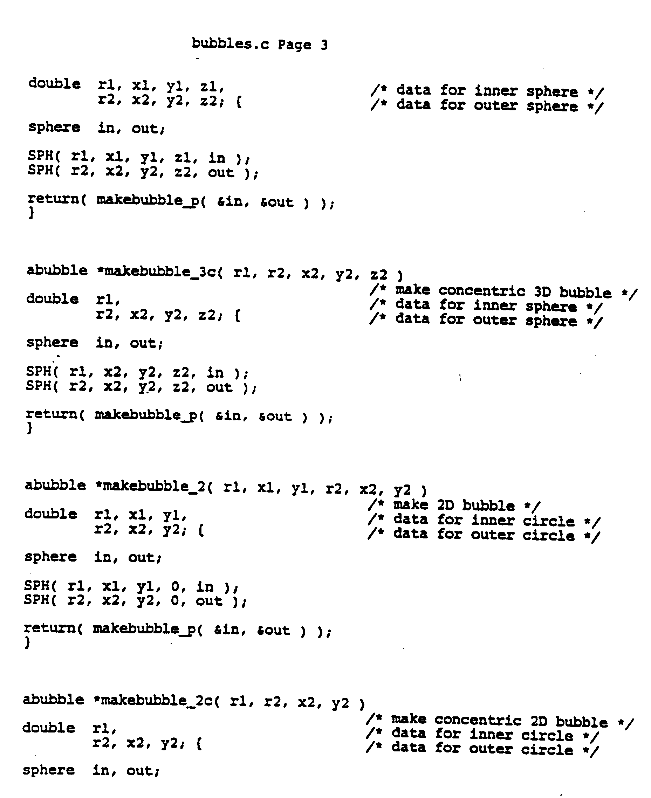

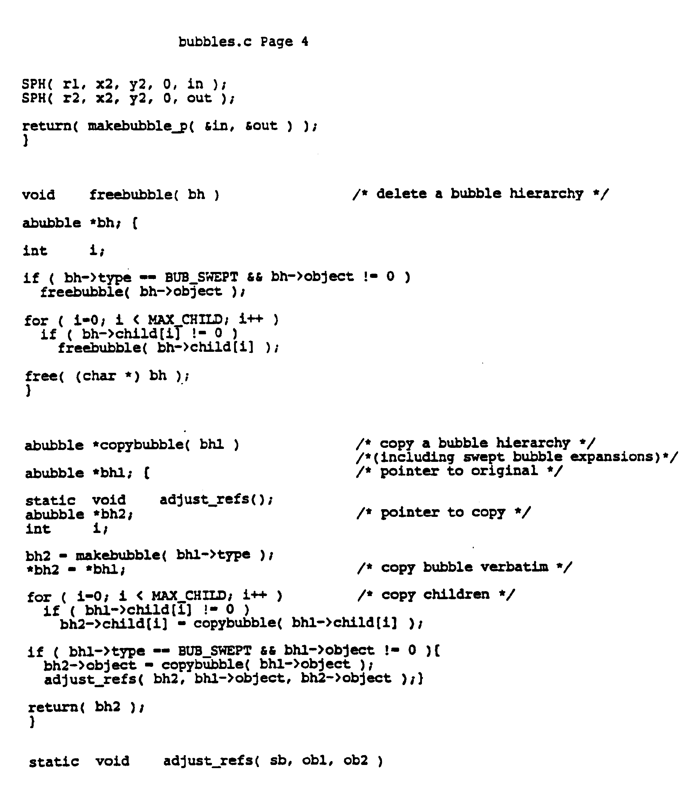

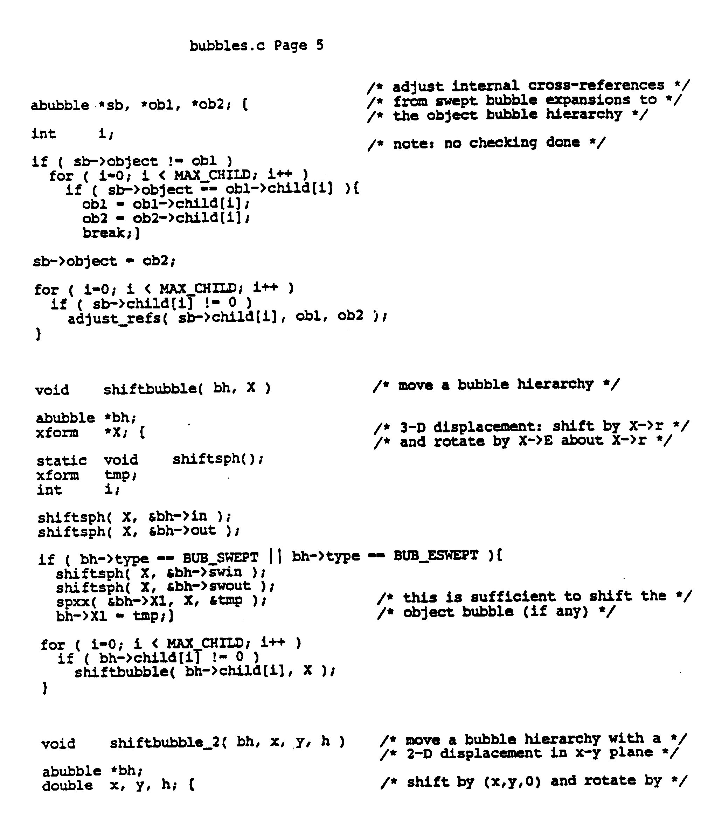

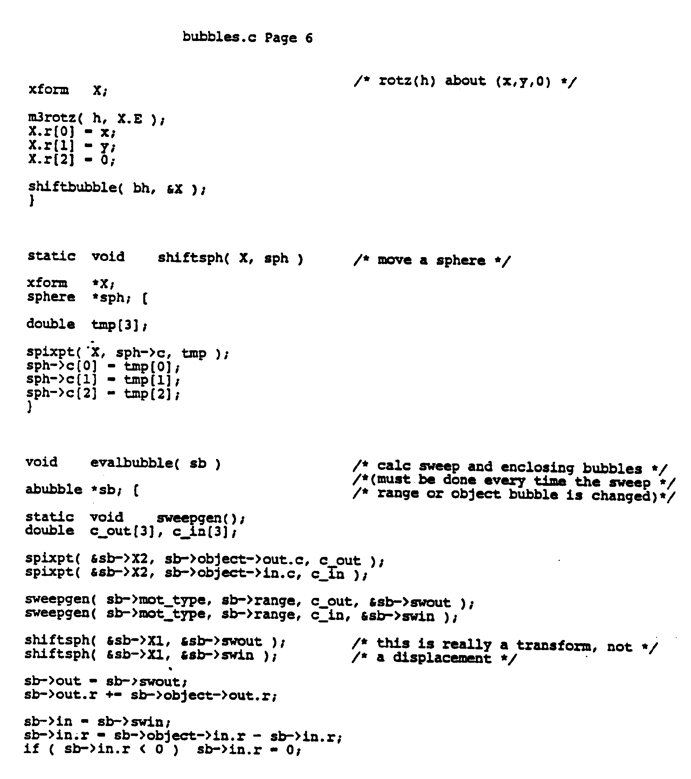

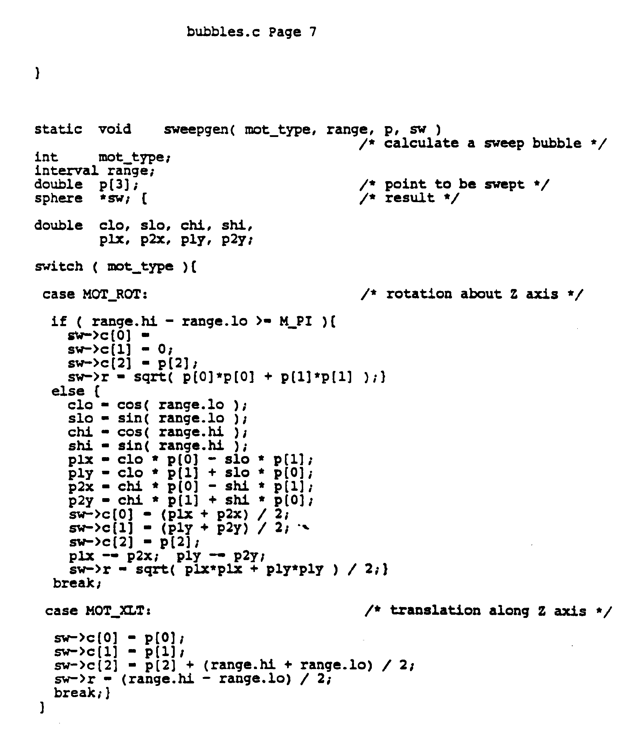

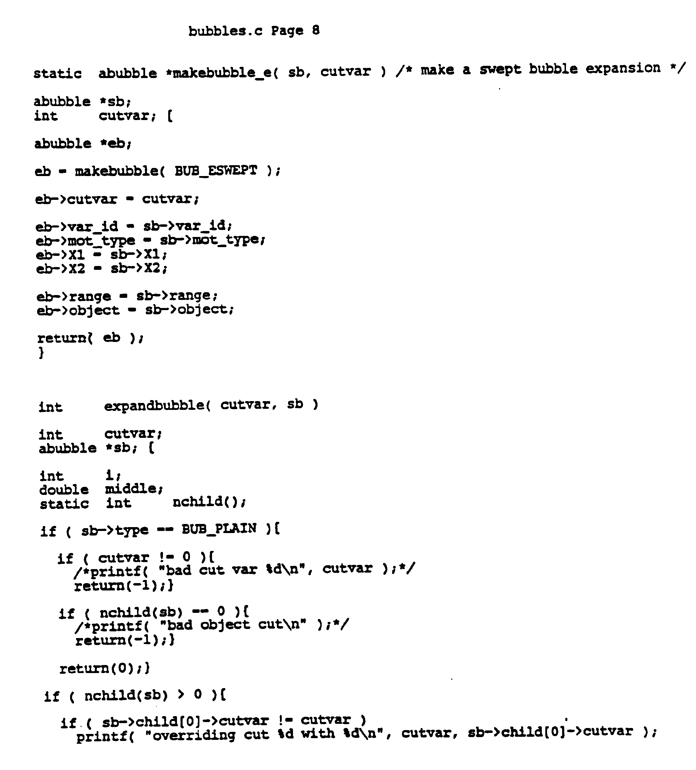

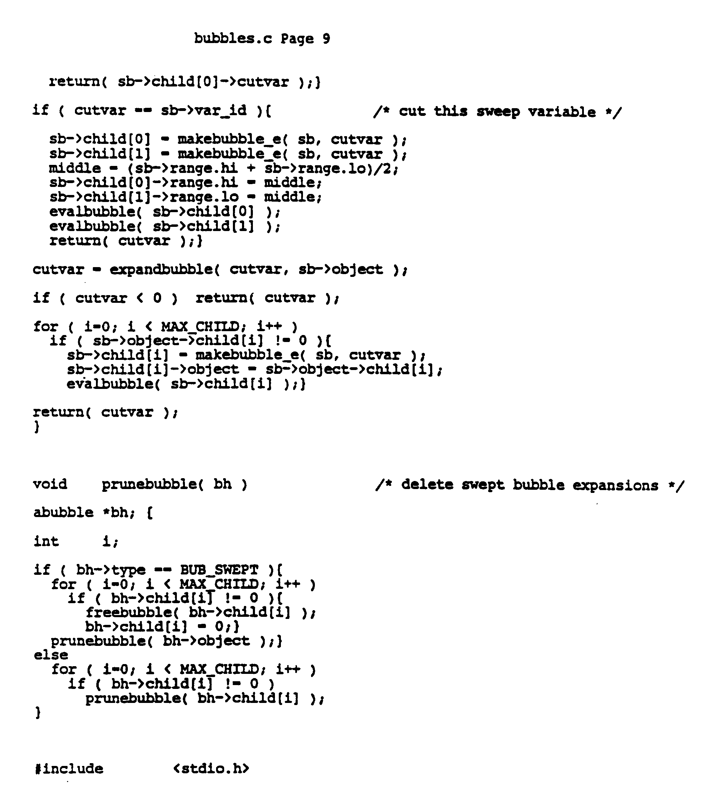

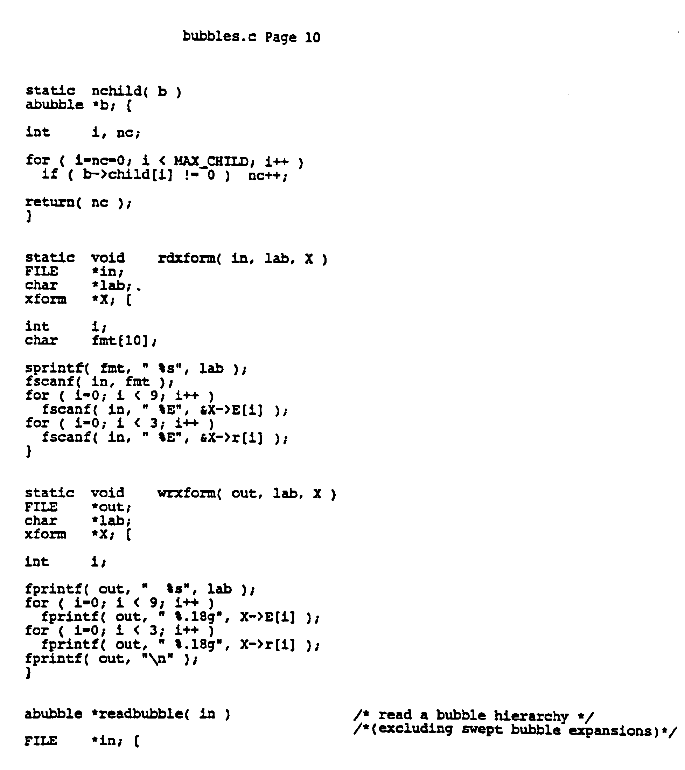

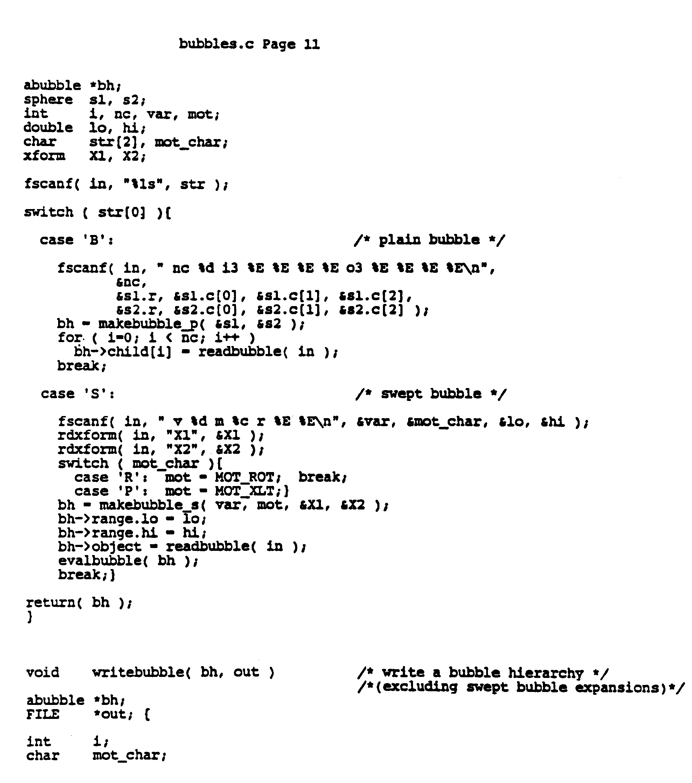

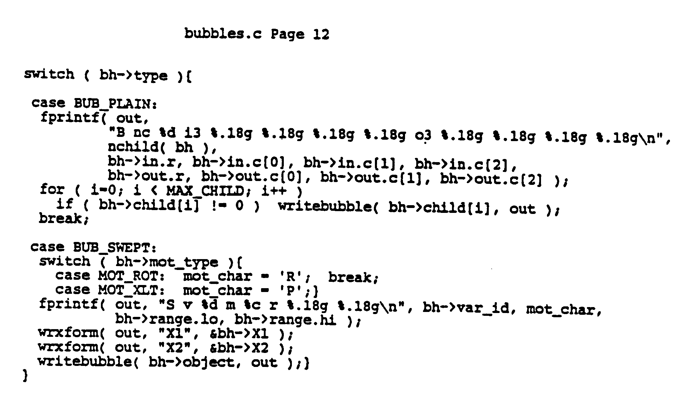

Figure 6 illustrates a configuration space region corresponding to the swept bubble hierarchy of Figure 5b. For every configuration in the shade region, the mechanism is contained within the enclosing bubble of SB1.

The bubble bursting technique, along with the suitable search stragegy, can be used to solve one of the most important aspects of the path planning problem: collision avoidance. The search strategy picks regions of configuration space which it is interested in, and uses the bubble bursting technique to classify them as to whether they are free or (possibly) obstructed by an obstacle. In order to obtain sufficient accuracy in the case for possible obstruction, either the search strategy or the bubble bursting algorithm may need to subdivide the region and classify individual sub-regions. In this way, a path planner can build up a picture of which regions in configuration space are safe to move through and which regions are not safe.

The swept bubble concept facilitates efficient path planning by allowing the planner to operate at varying levels of detail. Large regions of configuration space may be completely free from obstructions, or may be completely obstructed. The use of swept bubble hierarchies allow the planner to find these regions rapidly, using relatively coarse levels of detail. Another advantage of swept bubbles is that they allow the planner to plan at varying levels of detail, thus allowing it to trade accuracy for computation time. For example, a planner operating in a real-time environment may have a fixed deadline for coming up with a plan. It can be programmed to find a low accuracy path as quickly as possible, and then, if there is any time left, to improve the accuracy as much as possible within time available. A wave propagation path planner, of the type described in the patent applications first mentioned above, may be used to search the configuration space for an appropriate path which minimizes the value of a metric in the space.

## Claims

1. A method for detecting a potential collision between a first object that moves along a sweep curve and a second object, whereby space occupied by the first object in a stationary state is represented by an object bubble, characterized in that the method includes:
- determining a sweep bubble that includes the sweep curve,
- dilating the sweep bubble by sweeping the object bubble along the sweep curve to produce an enclosing bubble,
- detecting the potential collision by determining whether the second object collides with the enclosing bubble.

2. A method as claimed in Claim 1, which includes:
- bursting the original enclosing bubble to reveal a number of new enclosing bubbles,
- replacing the original enclosing bubble by the new enclosing bubbles for detecting a potential collision at the next hierarchical level of detail.

3. A method as claimed in Claim 2, where said bursting the original enclosing bubble comprises:
- bursting the object bubble into child object bubbles, each with an inherited sweep curve,
- for every child bubble, dilating the sweep bubble by sweeping the child object bubble along the inherited sweep curve to produce a child enclosing bubble,
- replacing the original enclosing bubble by the set of child enclosing bubbles.

4. A method as claimed in Claim 2 or 3, where bursting the original enclosing bubble comprises:
- dividing the sweep curve in a first portion and a second portion,
- determining a first sweep bubble that includes the first portion of the sweep curve and a second sweep bubble that includes the second portion the sweep curve,
- dilating the first sweep bubble by sweeping the object bubble along the first portion of the sweep curve to produce a first new enclosing bubble,
- dilating the second sweep bubble by sweeping the object bubble along the second portion of the sweep curve to produce a second new enclosing bubble,
- replacing the original enclosing bubble by the first new enclosing bubble and the second new enclosing bubble.

5. A method as claimed in Claim 4, where the sweep curve is divided substantially in half so that the first portion and the second portion are substantially equal in size.

6. A method as claimed in Claim 4 or 5, where the dividing terminates if the first or the second portion is smaller than a predetermined minimum value.

7. A method as claimed in Claim 4, 5 or 6, which includes:
- analyzing a first contribution to the enclosing bubble by the sweep bubble,
- analyzing a second contribution to the enclosing bubble by the object bubble,
- based on the first and the second contribution, deciding whether to burst the enclosing bubble by dividing the sweep curve or by bursting the object bubble.

8. A method as claimed in Claim 7, where the first contribution is the diameter of the sweep bubble and the second contribution is the radius of the object bubble.

9. A method as claimed in any of the Claims 1 to 8, characterized in, that the object bubble includes a first inner bubble that is enclosed by the object, and that the enclosing bubble includes a second inner bubble that is inside the first inner bubble for all positions of the object along the sweep curve.

## Patentansprüche

1. Verfahren zur Detektion einer möglichen Kollision zwischen einem ersten Objekt, das sich entlang einer Überstreichungskurve bewegt und einem zweiten Objekt, wodurch von dem ersten Objekt in einem stationären Zustand eingenommener Raum durch eine Objektblase dargestellt wird, dadurch gekennzeichnet, daß das Verfahren folgendes enthält:
- Bestimmen einer Überstreichungsblase, die die Überstreichungskurve enthält,
- Ausdehnen der Überstreichungsblase durch Überstreichen der Objektblase entlang der Überstreichungskurve zur Erzeugung einer umhüllenden Blase,
- Entdecken der möglichen Kollision durch Bestimmung, ob das zweite Objekt mit der umhüllenden Blase kollidiert.

2. Verfahren nach Anspruch 1, das folgendes enthält:
- Platzenlassen der ursprünglichen umhüllenden Blase, um eine Anzahl neuer umhüllender Blasen aufzudecken,
- Ersetzen der ursprünglichen umhüllenden Blase durch die neuen umhüllenden Blasen zum Entdecken einer möglichen Kollision auf dem nächsten hierarchischen Detaillierungsniveau.

3. Verfahren nach Anspruch 2, wobei das genannte Platzenlassen der ursprünglichen umhüllenden Blase folgendes umfaßt:
- Platzenlassen der Objektblase in Kinder-Objektblasen, jede mit einer ererbten Überstreichungskurve,
- für jede Kinder-Blase, Ausdehnen der Überstreichungsblase durch Überstreichen der Kinder-Objektblase entlang der ererbten Überstreichungskurve zur Erzeugung einer umhüllenden Kinder-Blase,
- Ersetzen der ursprünglichen umhüllenden Blase durch die Menge von umhüllenden Kinder-Blasen.

4. Verfahren nach Anspruch 2 oder 3, wobei Platzenlassen der ursprünglichen umhüllenden Blase folgendes umfaßt:
- Unterteilen der Überstreichungskurve in einen ersten Abschnitt und einen zweiten Abschnitt,
- Bestimmen einer ersten Überstreichungsblase, die den ersten Abschnitt der Überstreichungskurve einschließt und einer zweiten Überstreichungsblase, die den zweiten Abschnitt der Überstreichungskurve einschließt,
- Ausdehnen der ersten Überstreichungsblase durch Überstreichen der Objektblase entlang dem ersten Abschnitt der Überstreichungskurve zur Erzeugung einer ersten neuen umhüllenden Blase,
- Ausdehnen der zweiten Überstreichungsblase durch Überstreichen der Objektblase entlang dem zweiten Abschnitt der Überstreichungskurve zur Erzeugung einer zweiten neuen umhüllenden Blase,
- Ersetzen der ursprünglichen umhüllenden Blase durch die erste neue umhüllende Blase und die zweite neue umhüllende Blase.

5. Verfahren nach Anspruch 4, wobei die Überstreichungskurve nahezu halbiert wird, so daß der erste Abschnitt und der zweite Abschnitt nahezu gleich groß sind.

6. Verfahren nach Anspruch 4 oder 5, wobei das Unterteilen endet, wenn der erste oder der zweite Abschnitt kleiner als ein vorgegebener Minimalwert ist.

7. Verfahren nach Anspruch 4, 5 oder 6, das folgendes enthält:
- Analysieren eines ersten Beitrags zur umhüllenden Blase durch die Überstreichungsblase,
- Analysieren eines zweiten Beitrags zur umhüllenden Blase durch die Objektblase,
- Entscheiden, anhand des ersten und des zweiten Beitrags, ob die umhüllende Blase durch Unterteilen der Überstreichungskurve oder durch Platzenlassen der Objektblase zum Platzen gebracht werden soll.

8. Verfahren nach Anspruch 7, wobei der erste Beitrag der Durchmesser der Überstreichungsblase und der zweite Beitrag der Radius der Objektblase ist.

9. Verfahren nach einem der Ansprüche 1 bis 8, dadurch gekennzeichnet, daß die Objektblase eine erste innere Blase enthält, die von dem Objekt umschlossen wird und daß die umhüllende Blase eine zweite innere Blase enthält, die sich für alle Positionen des Objekts entlang der Überstreichungskurve innerhalb der ersten inneren Blase befindet.

## Revendications

1. Procédé de détection d'une collision potentielle entre un premier objet, qui se déplace le long d'une courbe de balayage, et un deuxième objet, l'espace occupé par le premier objet à l'état stationnaire étant représenté par une bulle objet, caractérisé en ce que le procédé comprend les étapes suivantes :
- on détermine une bulle de balayage qui comprend la courbe de balayage;
- on dilate la bulle de balayage en balayant la bulle objet le long de la courbe de balayage pour produire une bulle enserrante, et
- on détecte la collision potentielle en déterminant si le deuxième objet se heurte à la bulle enserrante.

2. Procédé selon la revendication 1, qui comprend les étapes suivantes :
- on fait éclater la bulle enserrante originale pour obtenir un certain nombre de nouvelles bulles enserrantes, et
- on remplace la bulle enserrante originale par les nouvelles bulles enserrantes pour détecter une collision potentielle au niveau hiérarchique de détail suivant.

3. Procédé selon la revendication 2, dans lequel ledit éclatement de la bulle enserrante originale comporte les étapes suivantes :
- on fait éclater la bulle objet en bulles objets enfants ayant chacune une courbe de balayage héritée;
- pour chaque bulle enfant, on dilate la bulle de balayage en balayant la bulle objet enfant le long de la courbe de balayage héritée pour produire une bulle enserrante enfant, et
- on remplace la bulle enserrante originale par l'ensemble de bulles enserrantes enfants.

4. Procédé selon la revendication 2 ou 3, dans laquelle l'éclatement de la bulle enserrante originale comprend les étapes suivantes :
- on scinde la courbe de balayage en une première partie et une deuxième partie;
- on détermine une première bulle de balayage qui comprend la première partie de la courbe de balayage et une deuxième bulle de balayage qui comprend la deuxième partie de la courbe de balayage;
- on dilate la première bulle de balayage en balayant la bulle objet le long de la première partie de la courbe de balayage pour produire une première nouvelle bulle enserrante;
- on dilate la deuxième bulle de balayage en balayant la bulle objet le long de la deuxième partie de la courbe de balayage pour produire une deuxième nouvelle bulle enserrante, et
- on remplace la bulle enserrante originale par la première nouvelle bulle enserrante et par la deuxième nouvelle bulle enserrante.

5. Procédé selon la revendication 4, dans lequel la courbe de balayage est scindée sensiblement par moitié, de telle sorte que la première partie et la deuxième partie soient sensiblement égales en taille.

6. Procédé selon la revendication 4 ou 5, dans lequel la scission se termine si la première ou la deuxième partie est plus petite qu'une valeur minimum prédéterminée.

7. Procédé selon la revendication 4, 5 ou 6, qui comprend les étapes suivantes :
- on analyse une première contribution à la bulle enserrante par la bulle de balayage;
- on analyse une deuxième contribution à la bulle enserrante par la bulle objet, et
- sur la base de la première et de la deuxième contributions, on décide d'éclater la bulle enserrante en divisant la courbe de balayage ou en faisant éclater la bulle objet.

8. Procédé selon la revendication 7, dans lequel la première contribution est le diamètre de la bulle de balayage et la deuxième contribution est le rayon de la bulle objet.

9. Procédé selon l'une quelconque des revendications 1 à 8, caractérisé en ce que la bulle objet comprend une première bulle interne qui est enserrée par l'objet et la bulle enserrante comprend une deuxième bulle interne qui se trouve à l'intérieur de la première bulle interne dans toutes les positions de l'objet le long de la courbe de balayage.
